# FASCICULE DE BREVET EUROPEEN

(11) **EP 2 271 474 B1**
(45) Date de publication et mention de la délivrance du brevet: **17.05.2017**
(21) Numéro de dépôt: 09738299.8
(22) Date de dépôt: 27.03.2009
(51) Int. Cl.: B29C 65/02, B65D 1/02, B29L 22/00

(54) **PROCEDE DE SOUDURE DE COL ET DE CORPS DE RESERVOIR D'UN RECIPIENT EN MATIERE PLASTIQUE ET RECIPIENT COMPORTANT AU MOINS UN RÉSERVOIR SOUDÉ SELON CE PROCÉDÉ**
VERFAHREN ZUR SCHWEISSUNG DES HALSES UND DES TANKKÖRPERS EINES AUS EINEM KUNSTSTOFFMATERIAL HERGESTELLTEN GEFÄSSES SOWIE GEFÄSS MIT MINDESTENS EINEM IN DIESEM VERFAHREN GESCHWEISSTEN TANK
METHOD FOR WELDING THE NECK AND TANK BODY OF A VESSEL MADE OF A PLASTIC MATERIAL, AND VESSEL COMPRISING AT LEAST ONE TANK WELDED BY SAID METHOD

(30) Priorité: 23.04.2008 FR 0852731
(43) Date de publication de la demande: 12.01.2011
(73) Titulaire: Cinqpats, 91470 Limours (FR)
(72) Inventeur: MATHIEZ, Jean-Louis, F-91470 Limours (FR)
(74) Mandataire: Derambure, Christian
(86) Numéro de dépôt international: PCT/FR2009/000352
(87) Numéro de publication internationale: WO 2009/133265

(56) Documents cités:
- GB-A- 2 187 703
- US-A- 4 579 242

## Description

L'invention se rapporte à un procédé de soudure entre un col et un corps de réservoir d'un récipient en matière plastique. L'invention concerne également un récipient comportant au moins un réservoir constitué d'un col et d'un corps soudés selon ce procédé.

Muni d'un dispositif de fermeture en liaison avec le col, ce récipient sera constitutif d'un emballage apte à contenir tout type de produits fluides, liquides ou pâteux, tels que des produits alimentaires, pharmaceutiques, cosmétiques, de papeterie ou d'entretien, nécessitant une barrière à l'évaporation et une protection contre les agents extérieur.

Il existe une grande variété de récipients en matière plastique destinés à contenir des produits fluides. Ces récipients portent divers noms selon leur forme ou leur configuration : bidon, bouteille, flacon, tube ou pot. Dans tous les cas, ce type de récipient est équipé d'un dispositif de fermeture, bouchon capot ou capsule suffisamment étanche, parfois muni d'un élément de jointage. Ce dispositif de fermeture peut être lié au col du récipient par tout système de liaison connu, par exemple: vissage, sertissage, encliquetage, coincement, soudure, dispositifs permettant de sécuriser la fermeture de façon temporaire pour les produits à usages multiples ou permanente pour les produits à usage unique, non refermables.

En plus de son rôle de stockage et de protection, un récipient a en général un rôle informatif, et il est fréquent de faire figurer un texte et diverses images informatives ou décoratives sur la face extérieure du récipient, soit par impression directe sur la surface du plastique, soit par revêtement d'une pellicule fine imprimée : étiquette, manchon, décalcomanie.

Après ouverture par l'utilisateur, le récipient a aussi fréquemment pour rôle de permettre ou faciliter l'utilisation du produit contenu. Pour cela, il peut être équipé d'un dispositif de diffusion (pompe, valve aérosol,...) ou d'un dispositif d'application (tige avec brosse, pinceau ou embout en mousse).

Les procédés traditionnels permettant de produire industriellement des récipients en matière plastique sont l'extrusion-soufflage et l'injection-soufflage.

La fabrication de récipients en matière plastique par extrusion-soufflage ou injection-soufflage présente un grand nombre d'inconvénients, comme évoqué ci-après.

Ces procédés sont lents, de plus les récipients sont faits dans des moules encombrants, ne permettant pas d'en placer plus de 2 à 8 sur une machine à extrusion-soufflage, ou 4 à 12 sur une machine à injection-soufflage.

De plus, ces procédés impliquent l'utilisation de matières plastiques « soufflables », c'est-à-dire des matières cristallines (comme le polypropylène, le polyéthylène, ou le PVC), dans des grades spécialement choisis pour leur plage de transition vitreuse importante.

Par ailleurs, le plan d'ouverture du moule provoque des nervures situées le long du « plan de joint », nervures plus ou moins épaisses suivant la qualité du moule : elles représentent un défaut esthétique pouvant perturber les opérations de décor ou d'étiquetage.

Du fait de sa conception en deux parties mobiles, le moule ne peut avoir un équilibre thermique parfait. Il en résulte des zones plus froides que d'autres qui peuvent affecter la qualité du récipient.

En outre, lorsque la matière est plaquée contre la surface du moule, l'air ambiant doit être évacué du moule par de petits évents et par le plan de joint. Il en résulte des défauts de surface sur le récipient et une grande difficulté à obtenir une surface brillante, notamment avec certaines matières, qui ne peuvent se souffler que dans un moule dont la surface est légèrement rugueuse.

De plus, les rayons et congés de faible valeur sont susceptibles de varier en fonction de la température de matière, de la température du moule et de la pression de l'air de soufflage.

La matière fondue étant exposée au contact direct de l'air ambiant en sortie d'extrudeuse, les paramètres de réglages seront influencés par les variations climatiques comme la température et l'humidité qui pourront générer des défauts.

L'épaisseur de matière ne peut être assurée de façon précise lors du soufflage, en fonction de la forme du récipient, les zones très étirées seront plus fines. Ces irrégularités d'épaisseur provoquent plusieurs inconvénients majeurs : le niveau de qualité barrière du récipient sera limité à la zone la plus fine (la plus perméable), les zones les plus épaisses représentent une dépense inutile de matière, la rigidité et la résistance mécanique du récipient seront aussi irrégulières.

Enfin, les paramètres de soufflage pouvant être très différents d'une matière à l'autre, il convient donc d'adapter le moule très précisément à la matière utilisée. Par voie de conséquence, un changement de matière implique en général un changement de moule.

D'autres modes de réalisation de l'état de la technique ont tenté de pallier les inconvénients cités des procédés d'extrusion-soufflage et d'injection-soufflage. Un mode de réalisation utilise par exemple un assemblage de plusieurs pièces dans un plan perpendiculaire à l'axe de symétrie du récipient ; ces pièces sont par exemple au nombre de deux, l'une composée de l'ouverture et d'une partie du corps, l'autre comportant l'autre partie du corps. Puis l'assemblage se fait par encliquetage, collage ou soudure.

Il est connu du document US 2 741 402 décrit un récipient constitué d'une pluralité de pièces en matière plastique flexibles, assemblées par soudure. Le procédé présente l'inconvénient d'inclure une bague métallique dans chaque jointure.

Par ailleurs, le document US 3 302 813 décrit un récipient constitué de plusieurs pièces en matière plastique adhérisées entre elles pour former un corps creux. Ce procédé n'est pas adapté à une production de série.

Le document EP 1 121 298 se rapporte à une bouteille composite réalisée en deux parties : un corps en matière plastique soufflée et un col en matière plastique injectée, ces deux pièces sont assemblées par un dispositif d'encliquetage étanche, ce qui donne au fabricant la possibilité de présenter un même corps avec plusieurs types de cols, ou un même col avec plusieurs tailles de corps. Cependant, le corps étant réalisé en soufflage, il conserve les inconvénients des procédés d'extrusion-soufflage ou d'injection-soufflage décrits précédemment.

Plus récemment, les brevets US5465856, US6045280 ou US6315140 décrivent la fabrication de récipients composés de deux parties, soudés, ou collées par ultrasons. Ces récipients présentent l'inconvénient d'avoir de relativement fortes épaisseurs de plastique pour permettre la soudure bout à bout des deux pièces. La zone de soudure se manifeste sous la forme d'un bourrelet ou de bavure, visible à l'extérieur du récipient, du fait de la forte énergie nécessaire à la fusion de la matière, ce défaut étant visible de l'extérieur du récipient.

Des améliorations proposent une soudure par rotation l'un par rapport à l'autre des bords des deux parties du récipient, ces bords ayant été amincis. Cette rotation crée une friction qui chauffe la zone de contact, et la soudure se fait grâce à la fonte partielle et temporaire de la matière plastique. Une fois la rotation arrêtée, les deux parties restent soudées.

Aucun de ces procédés connus ne permet donc d'obtenir toute forme de récipients de haute qualité (lisses, de forme et d'épaisseur régulières) et faciles à fabriquer en grande quantité, tels qu'ils sont par exemple utilisés pour contenir des produits de cosmétique ou de pharmacie.

Pour ce faire, la présente invention propose la réalisation de récipient par une soudure de pièces à bords amincis en épaisseur et présentant des angles d'attaque différents.

Plus précisément, la présente invention a pour objet un procédé de soudure entre un col et un corps de réservoir de récipient en matière plastique apte à recevoir un produit fluide, le col et le corps formant un couple d'éléments à souder disposés en alignement le long d'un axe principal et présentant en regard deux surfaces de contact, dans lequel une paroi d'assemblage de l'un au moins des éléments de col et/ou de corps à souder présente un amincissement partiellement linéaire en épaisseur par rapport au reste de l'élément, l'une au moins des parois d'assemblage des éléments à assembler ayant alors une surface de contact inclinées (α_{c}, α_{f}) par rapport à l'axe principal (X'X) formant entre elles un écart angulaire d'au moins sensiblement 3 à 5° entre elles. Les dimensions radiales des parois de contact sont telles que la paroi d'assemblage d'un élément est introduit en contact dans la paroi de l'autre élément, en ce qu'un effort est appliqué sur un des éléments pour mettre les surfaces de contact sous contrainte. De plus, la (ou les) paroi amincie(s) possédant une structure radialement déformable lors de la progression de la paroi, un apport d'énergie met en fusion la matière plastique des surfaces de contact alors assemblées entre elles en des zones locales creusées dans ces surfaces pour former un volume de matière en fusion (E). Cette étape de fusion est suivie d'une étape de refroidissement.

La faible épaisseur d'au moins l'une des deux zones de contact permet une soudure sans bourrelet. L'espace créé par la différence de la forte énergie nécessaire à la fusion de la matière, ce défaut étant visible de l'extérieur du récipient.

Des améliorations proposent une soudure par rotation l'un par rapport à l'autre des bords des deux parties du récipient, ces bords ayant été amincis. Cette rotation crée une friction qui chauffe la zone de contact, et la soudure se fait grâce à la fonte partielle et temporaire de la matière plastique. Une fois la rotation arrêtée, les deux parties restent soudées.

Aucun de ces procédés connus ne permet donc d'obtenir toute forme de récipients de haute qualité (lisses, de forme et d'épaisseur régulières) et faciles à fabriquer en grande quantité, tels qu'ils sont par exemple utilisés pour contenir des produits de cosmétique ou de pharmacie.

Pour ce faire, la présente invention propose la réalisation de récipient par une soudure de pièces à bords amincis en épaisseur et présentant des angles d'attaque différents.

Le document US 4579242 décrit un procédé de soudure entre deux éléments de réservoir en matière plastique apte à recevoir un produit fluide. Ce réservoir est volumineux à usage industriel (adoucisseur d'eau). Les deux éléments à souder sont disposés en alignement en présentant en regard deux surfaces de contact. La paroi d'assemblage des éléments présente un amincissement par rapport au reste de l'élément. La paroi d'assemblage des éléments a une surface de contact fortement inclinée par rapport à l'axe du réservoir. La structure comporte un agencement à pointe et creux destinés à coopérer. Les dimensions radiales des parois de contact sont telles que la paroi d'assemblage d'un élément est introduite en contact dans la paroi de l'autre élément. Un effort est appliqué sur un des éléments pour mettre les surfaces de contact sous contrainte. Un apport d'énergie met en fusion la matière plastique des surfaces de contact alors assemblées entre elles. Les parois amincies ont une structure radialement rigide lors de la progression de la paroi.
Le document US 4579242 n'est pas adapté au cas de réservoir taille beaucoup plus petite que celle des réservoirs pour adoucisseur d'eau, comme les réservoirs utilisés dans le domaine cosmétique ou pharmaceutique pour de l'eau de toilette, de l'après-rasage, un parfum, ou analogue. Avec de telles tailles, l'on ne peut envisager notamment que la paroi d'assemblage des éléments ait une surface de contact fortement inclinée par rapport à l'axe du réservoir ou que la structure comporte un agencement à pointe et creux. L'on ne peut envisager davantage de mettre en oeuvre des fibres.
Par suite, se pose le problème de souder deux éléments de réservoir en matière plastique apte à recevoir un produit fluide, comme les réservoirs utilisés dans le domaine cosmétique ou pharmaceutique pour de l'eau de toilette, de l'après-rasage, un parfum, ou analogue dont la taille est en conséquence de la destination. Et il se pose le problème de prolonger la zone de soudage.

Plus précisément, la présente invention a pour objet un procédé de soudure entre un col et un corps de réservoir de récipient en matière plastique apte à recevoir un produit fluide, le col et le corps formant un couple d'éléments à souder disposés en alignement le long d'un axe principal et présentant en regard deux surfaces de contact, dans lequel une paroi d'assemblage de l'un au moins des éléments de col et/ou de corps à souder présente un amincissement partiellement linéaire en épaisseur par rapport au reste de l'élément, l'une au moins des parois d'assemblage des éléments à assembler ayant alors une surface de contact inclinées (α_{c}, α_{f}) par rapport à l'axe principal (X'X) formant entre elles un écart angulaire d'au moins sensiblement 3 à 5° entre elles. Les dimensions radiales des parois de contact sont telles que la paroi d'assemblage d'un élément est introduit en contact dans la paroi de l'autre élément, en ce qu'un effort est appliqué sur un des éléments pour mettre les surfaces de contact sous contrainte. De plus, la (ou les) paroi amincie(s) possédant une structure radialement déformable lors de la progression de la paroi, un apport d'énergie met en fusion la matière plastique des surfaces de contact alors assemblées entre elles en des zones locales creusées dans ces surfaces pour former un volume de matière en fusion (E). Cette étape de fusion est suivie d'une étape de refroidissement.

La faible épaisseur d'au moins l'une des deux zones de contact permet une soudure sans bourrelet. L'espace créé par la différence angulaire entre les zones de fusion permet de stocker l'excès de matière après déformation élastique radiale de l'un des éléments et mise en fusion pour éviter une bavure extérieure inesthétique.

Selon des modes particuliers de mise en oeuvre :
- les éléments à souder sont formés par injection de matière plastique dans un même moule comportant deux jeux d'empreintes appropriées, ou bien dans deux moules distincts ;
- les éléments à souder étant positionnés en alignement par rapport à l'axe principal et les surfaces de contact de ces éléments étant en regard, l'un au moins des deux éléments est maintenu en position par un outillage approprié de façon à limiter les déformations du récipient, et une force parallèle à l'axe principal est exercée sur l'un au moins des deux éléments avec une intensité réglée de façon à provoquer une déformation élastique d'au moins l'un de ces éléments du fait de l'écart angulaire entre les deux surfaces de contact ;
- la matière plastique est élevée en température au niveau des surfaces de contact entre les deux éléments tout en maintenant l'application de la force jusqu'à provoquer la soudure par fusion des zones locales ;
- l'élévation de température est assurée par un apport de chaleur par rayonnement focalisée sur la zone à souder, par un générateur d'ultrasons réglé entre 20 000 et 50 000 cycles par seconde et équipé d'une sonotrode adaptée à la géométrie de l'un des éléments , par la mise en oscillation angulaire de l'un des éléments autour de l'axe principal à une fréquence comprise entre 50 et 500 cycles par seconde, par la mise en oscillation axiale de l'un des éléments le long de l'axe principal à une fréquence comprise entre 50 et 500 cycles par seconde, ou par une mise en rotation de l'un des éléments autour de l'axe principal à une vitesse comprise entre environ 1 000 et 10 000 tr/min selon le matériau utilisé;
- les phases de démarrage, accélération, maintien en vitesse, ralentissement et arrêt s'effectuent sur une durée totale inférieure à une seconde, l'arrêt de la rotation s'effectuant dans une position angulaire précise autour de l'axe principal par détection de position, par exemple à l'aide d'un capteur de position.

L'invention concerne également un récipient comportant au moins un réservoir de corps et de col d'ouverture soudés selon le procédé défini ci-dessus.

Selon des modes de réalisation particuliers :
- le récipient comporte deux réservoirs dont les couples d'éléments disposés en opposition le long d'un même axe principal et les réservoirs présentent un fond de corps de réservoir commun ;
- le récipient comporte deux réservoirs dont les couples d'éléments disposés le long de deux axes principaux sensiblement parallèles et les réservoirs comportent au moins une face interne commune ;
- le récipient comporte au moins trois réservoirs, disposés respectivement le long d'axes principaux appartenant à un même plan ;
- les réservoirs sont disposés têtes bêches ;
- chaque col ouvert est adapté au montage d'un système de bouchage choisi entre vissage, clipsage et sertissage ;
- le maintien en position d'un élément de réservoir est effectué par une enclume comportant deux demi-coquilles ;
- les moyens d'entraînement en rotation lors de la soudure sont choisis parmi des crans, ergots, des zones de friction et l'extrémité du filetage lui-même ;
- le récipient est constitué d'un matériau de base sélectionné, en fonction de la compatibilité chimique avec le contenu des réservoirs et de l'aspect recherché, parmi les matériaux thermoplastiques de polypropylènes (PP), polyéthylènes (PE), polyamides (PA), résines acétals (POM), les polyesters (PET, PEN), les polycarbonates (PC) et les résines à base de styrène (PS, SAN, ABS, SBS).

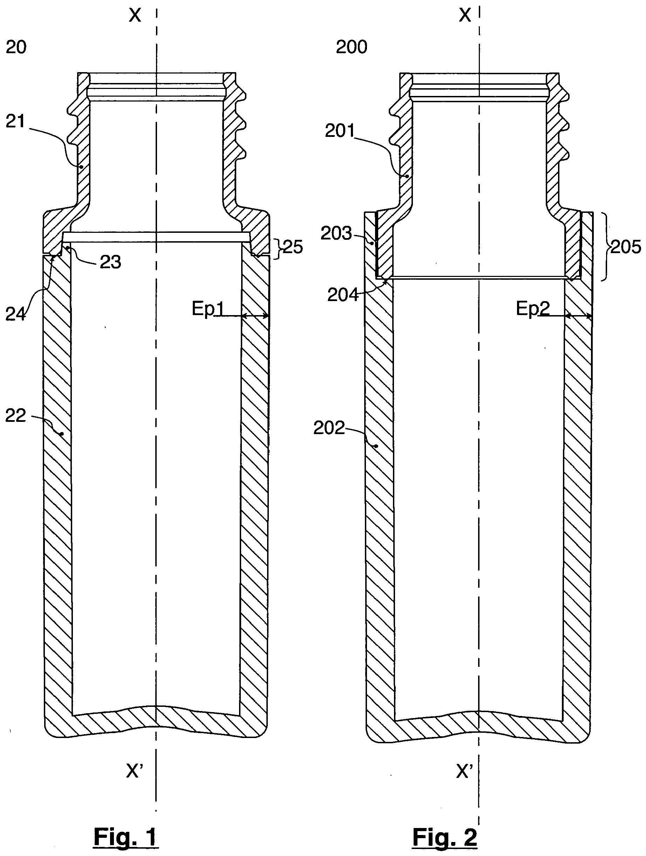

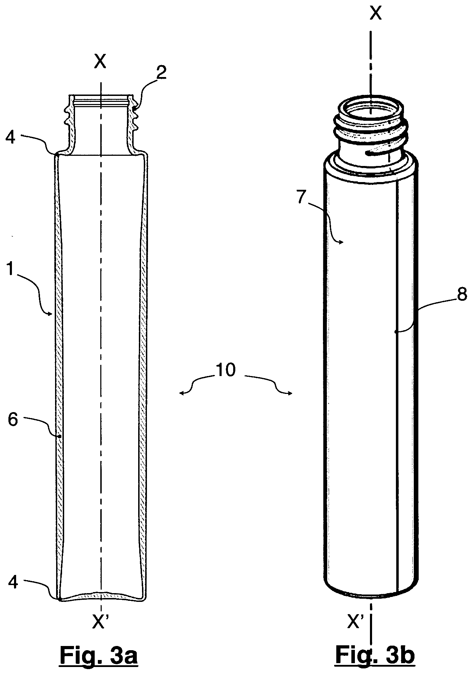

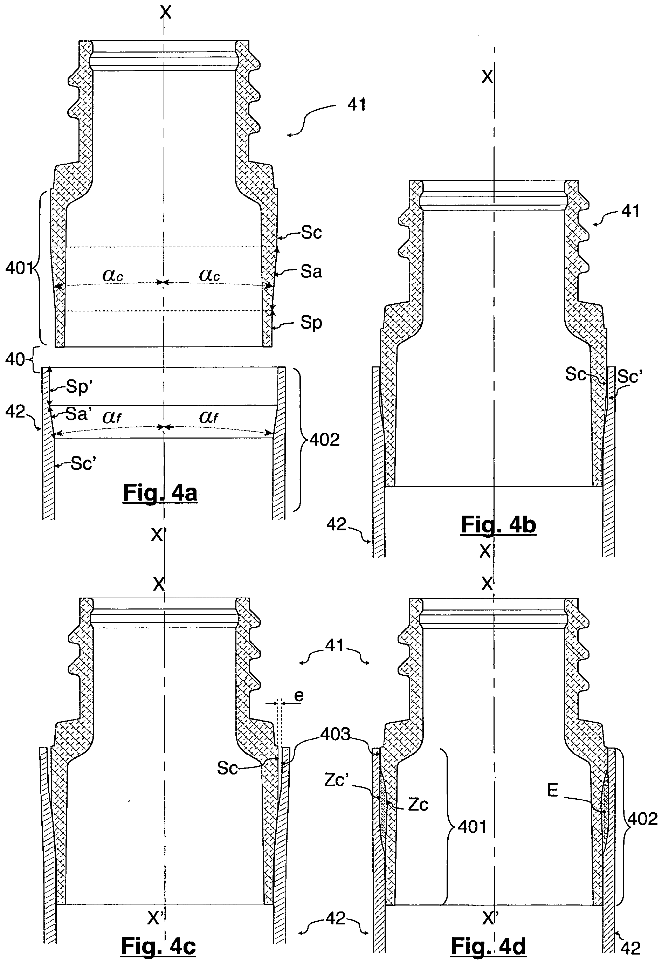

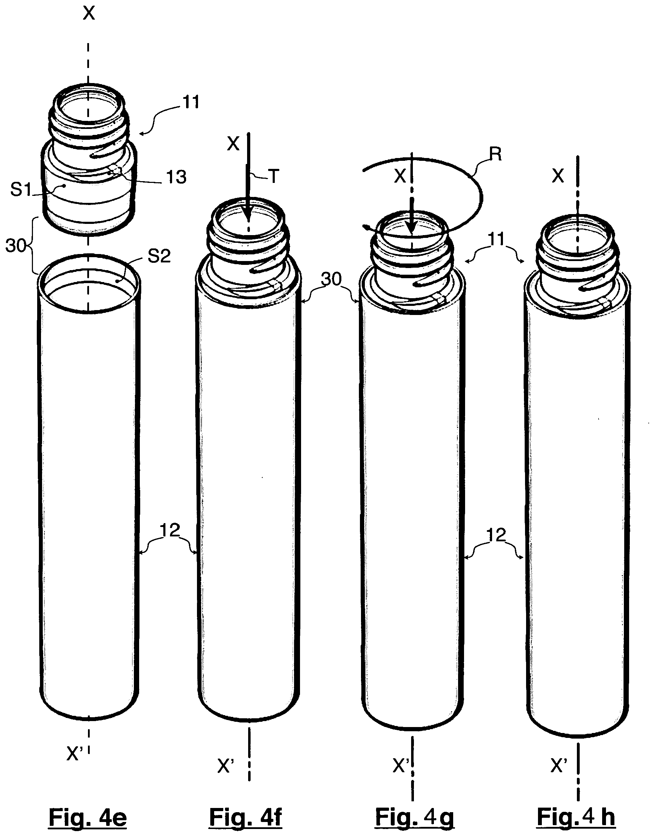

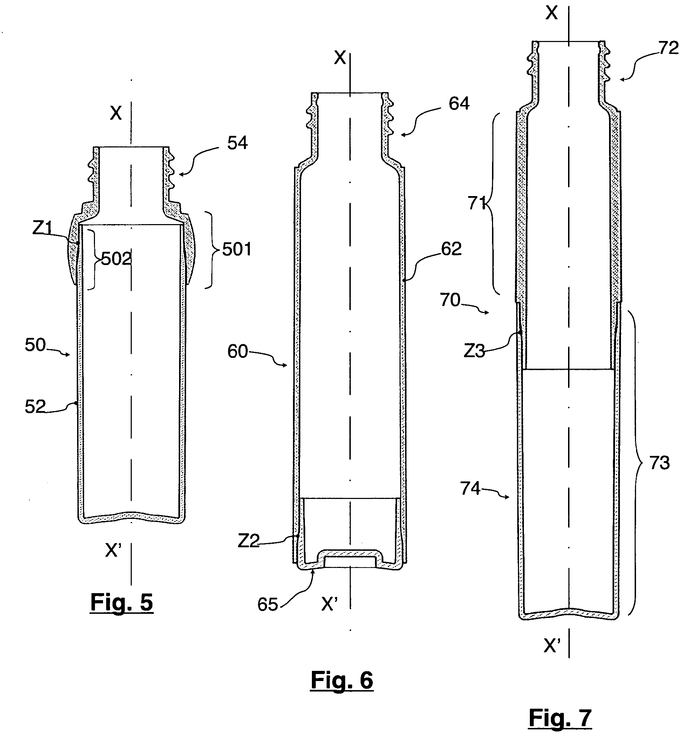

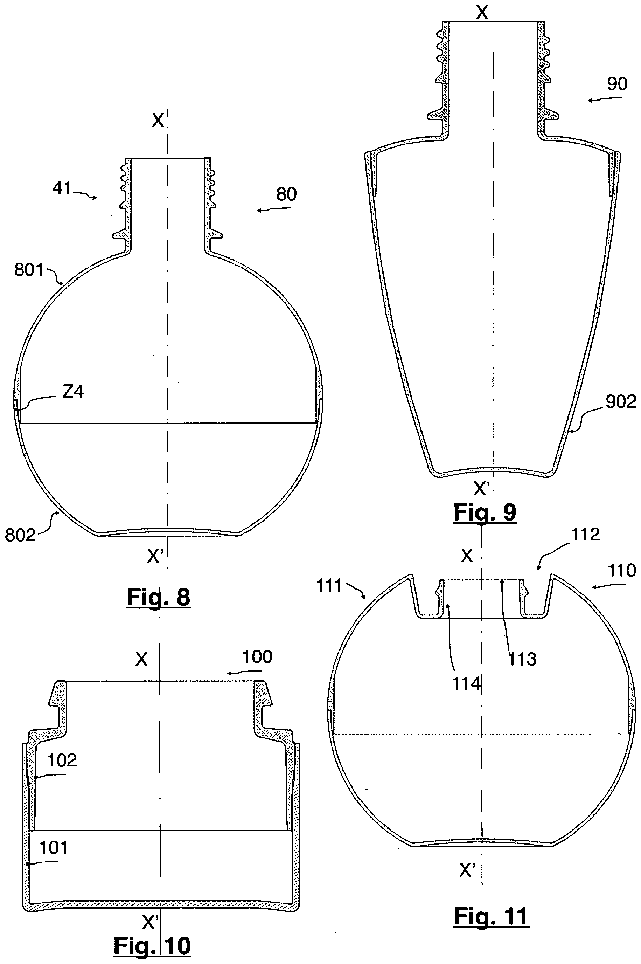

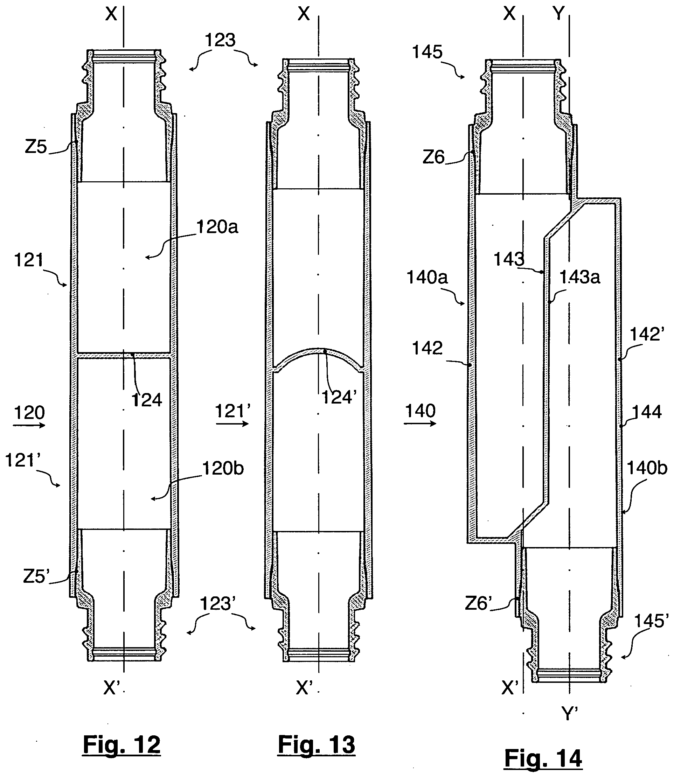

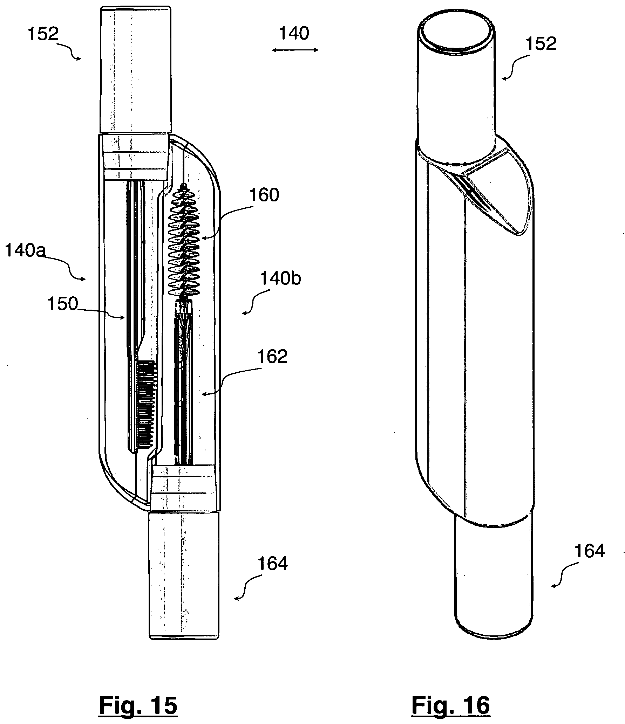

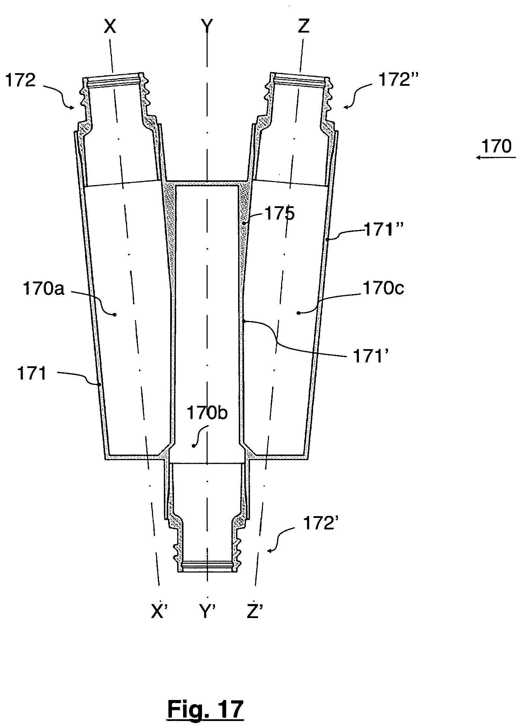

D'autres caractéristiques et avantages de l'invention apparaîtront à la lecture d'exemples non limitatifs de réalisation préférés qui suivent, en référence aux figures annexées qui représentent, respectivement :
- en figures 1 et 2, des vues en coupe d'un exemple de récipient soudé bout à bout par ultrasons de l'art antérieur faisant apparaître de fortes épaisseurs;
- en figures 3a et 3b, des vues en coupe et de face d'un exemple de récipient obtenu par les procédés d'injection-soufflage ou d'extrusion-soufflage de l'art antérieur;
- en figures 4a à 4d, en vue de coupe partielle, les étapes principales d'un exemple de soudure selon invention d'un récipient ;
- en figures 4e à 4h, des vues cavalières globales des étapes principales de réalisation d'un exemple de récipient fabriqué selon l'invention ;
- en figures 5 à 7, des vues en coupe longitudinale selon l'axe principale d'exemples de différentes positions des surfaces de contact formant des zones de soudure selon invention ;
- en figures 8 à 14, des vues en coupe longitudinale d'exemples de différentes formes de récipients selon invention ;
- en figures 15 et 16, des vues en perspective d'exemples d'utilisation du récipient selon la figure 14 ; et
- en figure 17, une vue en coupe d'un exemple de récipient selon invention composé de trois réservoirs formés le long de plusieurs axes principaux disposés dans le plan de coupe.

La figure 1 présente, en coupe longitudinale selon l'axe principal X'X, un exemple de récipient 20 constitué de deux éléments 21 et 22 fabriqués par injection de matière plastique dans des empreintes de moules et assemblés par un procédé de soudure par ultrasons. L'élément 22 comporte une collerette intérieure 23 de recentrage de l'élément 21. L'élément 21 comporte un cordon de section triangulaire 24 destiné à fondre préférentiellement lors de l'opération de soudure bout à bout. L'encombrement de la collerette 23 et celle du cordon 24 imposent une forte épaisseur Ep1 de l'élément 22.

La figure 2 présente, en coupe longitudinale selon l'axe principal X'X, un exemple de récipient 200 constitué de deux éléments 201 et 202 fabriqués par injection de matière plastique dans des empreintes de moules et assemblés par un procédé de soudure par ultrasons. L'élément 202 comporte une collerette extérieure 203 de recentrage de l'élément 201. L'élément 201 comporte un cordon de section triangulaire 204 destiné à fondre préférentiellement lors de l'opération de soudure bout à bout. L'encombrement de la collerette 203 et celle du cordon 204 imposent une forte épaisseur Ep2 de l'élément 202.

La figure 3a présente, en coupe longitudinale selon l'axe principal X'X, un exemple de récipient 10 fabriqué par extrusion-soufflage ou injection-soufflage , avec un corps 1 formant un fond de réservoir, et un col ouvert 2 de réservoir. Du fait des procédés de fabrication utilisés pour réaliser un réservoir en une seule pièce, le corps 1 présente des zones d'épaisseur inégale avec des portions fines 4 et des portions plus épaisses 6.

De plus, comme illustré sur la figure 3b qui expose de face le récipient de la figure 3a, la face externe 7 présente une ligne d'épaisseur 8 laissée par le plan de joint de l'ouverture du moule par extrusion-soufflage ou injection-soufflage.

Le procédé de soudure selon l'invention est illustré en vues de coupe partielle, selon les figures 4a à 4d, d'un récipient cylindrique 40 à section circulaire en polypropylène. La soudure est réalisée à partir de deux éléments 41 et 42, formant un réservoir 40a après assemblage. Le récipient est donc du type à réservoir unique, dit R1.

La figure 4a montre une extrémité du corps 42 et le col 41 du récipient 40 avant assemblage, tels qu'obtenus par moulage. Les deux parois d'assemblage, la paroi de base 401 du col 41 et la paroi 402 d'extrémité du corps 42, présentent des portions amincies. Plus précisément, les parois 401 et 402 sont pourvues de faces d'assemblage, respectivement une face externe Fa et une face interne Fa', formées respectivement à la base du col 41 et à l'extrémité du corps 42.

Chaque paroi d'assemblage, 401 et 402, se compose d'une première portion d'épaisseur constante correspondant à une première portion de face d'assemblage, respectivement Sc et Sc'. Le diamètre de la portion Sc de face externe du col est supérieur à celui de la portion Sc' de face interne Sc' de l'extrémité du corps 42.

Puis l'épaisseur des parois d'assemblage diminuent linéairement sur des portions de faces de contact Sa et Sa' des faces d'assemblage Fa et Fa'.

Enfin, l'amincissement reste sensiblement constant sur des portions d'extrémité Sp et Sp' des faces Fa et Fa'.

Dans l'exemple illustré, l'écart angulaire entre les inclinaisons des faces de contact Sa et Sa' est sensiblement proche de 4°, avec:
- l'angle α_{c} de l'amincissement linéaire de la portion de face Sa de la paroi de base 401, par rapport à l'axe X'X, est égal à 4°, et
- l'angle α_{f} de l'amincissement linéaire de la portion de face Sa' de l'extrémité 402 du corps 42, par rapport à l'axe X'X, est égal à 8°.

Les figures 4b et 4c montrent la progression de l'assemblage des éléments : les deux éléments 41 et 42 sont mis en alignement par rapport à l'axe principal de révolution X'X, et une force exercée parallèlement à cet axe permet le recouvrement progressif des faces d'assemblage Fa et Fa'. Le diamètres de l'extrémité amincie Sp' du corps 42 est sensiblement égal ou à peine supérieur à celui de la face externe Sc non amincie du col 41.

La géométrie inclinée des faces de contact par rapport à l'axe principal X'X induit une déformation élastique de l'extrémité 402 du corps 42 lors de la progression. Cette déformation se traduit par la présence de l'écart « e », entre la face externe non amincie Sc du col 41 et le bord 403 de la face d'extrémité Sp' du corps 42 en fin de progression (figure 4c), au regard de l'écart quasi-nul entre cette même face externe Sc et le bord 403 en début de progression (figure 4b).

La fusion des parois de polypropylène 401 et 402, respectivement du col 41 et d'extrémité du corps 42, est alors effectuée par élévation localisée en température par friction circulaire ou par tout type d'apport d'énergie (figure 4d). Les zones de fusion Zc et Zc' des faces de contact respectives Sa et Sa' forment une matière commune dans un espace « E » disposé entre ces zones.

Le bord 403 de la face de contact Sc' de l'extrémité du corps 42 revient élastiquement, lors du refroidissement, en contact avec la face 401 du col 41 en emprisonnant l'excès de matière.

Les phases d'assemblage et de soudure d'un col et d'un corps formant le récipient 40a apparaissent plus globalement sur les figures en vue cavalière 4e à 4h.

Avant assemblage (figure 4e), le col 41 présente la face d'assemblage Fa et le corps 12 la face d'assemblage Fa', telles que décrites précédemment. Le col 41 est muni de deux ergots diamétralement opposés 13 (sur la figure un seul ergot est visible) destinés à entraîner le col 41 en rotation.

Le col 41 est ensuite introduit dans le corps 12 (flèche T, figure 4f).

Une action en rotation est alors exercée, à l'aide d'un outillage connu et non représenté, selon la flèche de rotation R autour de l'axe X'X du récipient, afin d'effectuer la soudure par friction (figure 4g). La vitesse de rotation est de l'ordre de 5 000 tr/min pendant une durée inférieure à 1 seconde.

Le récipient final 40 apparaît sur la figure 4h, le col 41 du récipient 30 étant soudés.

Les figures 5 à 11 illustrent différentes formes de récipients à réservoir unique et axe central X'X.

La figure 5 montre un exemple de récipient 50 selon l'invention avec un corps de réservoir 52 dont la paroi d'extrémité 502 est, contrairement à l'exemple précédent, à l'intérieur de la paroi de base 501 du col ouvert 54 au niveau de la zone de soudure « Z1 ».

Dans un autre exemple de réalisation de récipient 60 (figure 6), le col 64 se prolonge pour former un corps de réservoir cylindrique ouvert 62 d'un seul tenant. La zone de soudure « Z2 » est alors réalisée à l'extrémité ouverte du corps 62 sur un fond de réservoir 65, disposé à l'opposé du col 64.

La figure 7 montre un exemple de récipient 70 selon invention avec une zone de soudure « Z3 » disposée entre un prolongement cylindrique 71 du col 72 et la portion cylindrique 73 du corps de réservoir 74 de sorte que la soudure Z3 se trouve sensiblement au milieu du récipient 70.

Les figures 8 à 11 illustrent différentes formes de récipients selon l'application envisagée, par exemple dans le domaine cosmétique ou pharmaceutique - eau de toilette, après-rasage, parfums, pilulier, etc. - , dans le cas de récipients à réservoir unique, et dans lesquels :
- la paroi de base 801 du col 41 est sensiblement hémisphérique, le corps 802 a une forme de tronc de sphère et la zone de soudure « Z4 » est disposée sensiblement au milieu du réservoir ainsi formé de manière à former un récipient 80 sensiblement sphérique (figure 8) ;
- le corps de réservoir 902 du récipient 90 a une forme de tronc de cône (figure 9);
- les récipients 100 et 110 ont des diamètres de corps de réservoir 101 et de base de col 102 sensiblement égaux à la hauteur « H » du récipient 100 (figure 10) en variante du récipient 70 présenté en figure 7, et
- une paroi de base 111 de col 112 s'étendant au-delà de l'ouverture 113 du col 114 (figure 11) en variante du récipient 80 en référence à la figure 8.

Grâce au procédé selon l'invention, il est possible de réaliser des formes de récipients tels qu'illustrés par les figures 8 à 11, alors que ces mêmes récipients sont difficiles à obtenir par soufflage. Un tel récipient du type représenté en figure 10 constitue avantageusement un pot pour un produit cosmétique ou alimentaire.

La figure 12 montre un premier exemple de récipient 120 à deux réservoirs 120a et 120b, composé ici de deux corps de réservoir 121 et 121' disposés en opposition le long de l'axe principal de révolution X'X. Ainsi, les réservoirs ont un fond plat commun 124 et les deux corps 121 et 121' s'élèvent en sens opposé à partir de ce fond, les zones de soudure Z5 et Z5' et les cols ouverts 123 et 123' étant formés le long du même axe X'X.

En variante, le fond commun peut ne pas être plat et, comme illustré par le récipient 121' en figure 13, avoir par exemple une forme courbe 124', en particulier une calotte sphérique. Une telle réalisation permet d'obtenir un effet de continuum, sans séparation, entre deux produits de couleurs différentes, l'effet étant amplifié lorsque l'un est translucide et l'autre opaque.

En référence à la figure 14, un autre exemple de récipient 140 à deux réservoirs selon l'invention est composé de deux réservoirs 140a et 140b disposés tête-bêche le long de deux axes principaux sensiblement parallèles, X'X et Y'Y. Les corps 142 et 142' présentent une paroi interne commune 143, sensiblement plane sur sa portion principale 143a, et une paroi externe cylindrique 144 également commune sur la partie centrale, hors des parois des zones de fusion « Z6 » et « Z6' ». Les cols ouverts 145 et 145' sont centrés le long des axes principaux, respectivement X'X et Y'Y.

Il est à noter que les récipients des figures 12 à 14 seraient impossible à réaliser par soufflage du fait de l'existence d'une paroi interne.

Les figures 15 et 16 représentent, respectivement en coupe et en vue perspective, un exemple d'utilisation du récipient 140 selon la figure 14 comme applicateur de mascara. Le réservoir de mascara 140a loge un peigne d'application 150 dont la tige est solidaire du capuchon de fermeture 152. L'autre réservoir de mascara 140b contient une brosse d'application 160 montée sur une tige 162 en liaison avec le capuchon de fermeture 164.

La figure 17 illustre, en coupe longitudinale dans le plan d'axes principaux X'X, Y'Y et Z'Z non parallèles, un exemple de récipient 170 à trois réservoirs 170a, 170b et 170c selon invention. Le récipient présente un plan de symétrie perpendiculaire au plan de coupe et passant par l'axe central X'X, les deux autres axes principaux Y'Y et Z'Z étant faiblement inclinés par rapport à l'axe central X'X.

Ce récipient 170 est composé de trois corps de réservoir, 171, 171' et 171", disposés respectivement le long de chaque axe principal. Les corps de réservoir sont disposés tête-bêche, et sont soudés aux cols ouverts, respectivement 172, 172' et 172", en des zones Z7, Z7' et Z7" pour former trois réservoirs. Les corps des réservoirs possèdent des parties parties communes 175 dont la structure est adaptée pour former une seule pièce.

L'invention n'est pas limitée aux exemples de réalisation décrits et représentés. Il est possible également de prévoir des récipients composés de plus de trois corps de réservoir à cols soudés selon l'invention pour réaliser des barrettes d'essais de couleurs, en particulier de vernis à ongles ou de peinture. D'autre part, toute forme de révolution est possible, que ce soit de révolution ou cylindrique à section géométrique variée (circulaire, triangulaire, rectangulaire, etc.) et la position de la zone de soudure formée selon un positionnement approprié.

## Revendications

1. Procédé de soudure entre un col (41) et un corps (42) de réservoir de récipient en matière plastique apte à recevoir un produit fluide, le col (41) et le corps (42) formant un couple d'éléments à souder disposés en alignement le long d'un axe principal (X'X) et présentant en regard deux surfaces de contact, dans lequel :
- les parois d'assemblage (401, 402) des éléments de col (41) et de corps (42) à souder sont pourvues de faces d'assemblage, une externe et une interne,
- chaque paroi d'assemblage (401, 402) se compose d'une première portion d'épaisseur constante correspondant à une première portion (Sc, Sc') de la face d'assemblage,
- une paroi d'assemblage (401, 402) présente un amincissement en épaisseur par rapport au reste de l'élément (41, 42), les parois d'assemblage (401, 402) ayant alors une face de contact (Sa, Sa') inclinée (α_{c}, α_{f}) par rapport à l'axe principal (X'X),
- les dimensions radiales des parois d'assemblage (401, 402) sont telles que la paroi d'assemblage (401, 402) d'un élément (41, 42) est introduite en contact dans la paroi d'assemblage (402, 401) de l'autre élément (42, 41), un effort étant appliqué sur un des éléments (41, 42),
- les portions amincies des parois d'assemblage (401, 402) possèdent une structure déformable,
- un apport d'énergie met en fusion la matière plastique des faces de contact (Sa, Sa') alors assemblées entre elles,
- cette étape de fusion est suivie d'une étape de refroidissement,
**caractérisé par le fait que**
- chaque paroi d'assemblage (401, 402) se compose, outre la première portion d'épaisseur constante et l'amincissement partiellement linéaire en épaisseur, d'une portion d'extrémité (Sp, Sp') sur laquelle l'amincissement reste sensiblement constant,
- les faces de contact (Sa, Sa') inclinées forment entre elles un écart angulaire d'au moins sensiblement 3° à 5°,
- les parois amincies des parois d'assemblage (401, 402) possédant une structure radialement déformable lors de la progression de la paroi, un effort étant appliqué sur un des éléments (41, 42) pour mettre les faces de contact (Sa, Sa') sous contrainte, la géométrie inclinée des faces de contact (Sa, Sa') induit une déformation élastique de l'extrémité de l'élément de corps (42) se traduisant par la présence d'un écart radial (e) entre la face externe non amincie de l'élément de col (41) et le bord de l'extrémité (Sp') de l'élément de corps (42) en fin de progression, au regard de l'écart quasi-nul en début de progression,
- l'apport d'énergie met en fusion la matière plastique des faces de contact (Sa, Sa') en des zones locales (Zc, Zc') creusées dans ces faces pour former un volume de matière en fusion (E),
- lors du refroidissement, le bord (403) de la face de contact (Sc') de l'extrémité du corps (42) revient élastiquement en contact avec la face du col (41) en emprisonnant l'excès de matière.

2. Procédé de soudure selon la revendication 1, dans lequel les éléments à souder (41, 42) sont formés par injection de matière plastique dans un même moule comportant deux jeux d'empreintes appropriées, ou bien dans deux moules distincts.

3. Procédé de soudure selon la revendication 1 ou 2, dans lequel, les éléments à souder (41 , 42) étant positionnés en alignement par rapport à l'axe principal (X'X) et les surfaces de contact (Sc, Sc') de ces éléments étant en regard, l'un au moins des deux éléments (41 , 42) est maintenu en position par un outillage approprié de façon à limiter les déformations du récipient, et une force parallèle à l'axe principal est exercée sur l'un au moins des deux éléments (41 , 42) avec une intensité réglée de façon à provoquer une déformation élastique d'au moins l'un de ces éléments du fait de l'écart angulaire entre les deux surfaces de contact (Sc, Sc').

4. Procédé de soudure selon la revendication précédente, dans lequel le maintien en position d'un élément (41, 42) de réservoir (40a) est effectué par une enclume comportant deux demi-coquilles.

5. Procédé de soudure selon l'une quelconque des revendications précédentes, dans lequel la matière plastique est élevée en température au niveau des surfaces de contact (Sc, Sc') entre les deux éléments (41, 42) tout en maintenant l'application de la force jusqu'à provoquer la soudure par fusion des zones locales (Zc, Zc').

6. Procédé de soudure selon la revendication précédente, dans lequel l'élévation de température est assurée par un apport de chaleur par rayonnement focalisée sur la zone à souder.

7. Procédé de soudure selon la revendication 5, dans lequel l'élévation de température est assurée par un générateur d'ultrasons réglé entre 20 000 et 50 000 cycles par seconde et équipé d'une sonotrode adaptée à la géométrie de l'un des éléments.

8. Procédé de soudure selon la revendication 5, dans lequel l'élévation de température est assurée par la mise en oscillation angulaire de l'un des éléments autour de l'axe principal à une fréquence comprise entre 50 et 500 cycles par seconde.

9. Procédé de soudure selon la revendication 5, dans lequel l'élévation de température est assurée par la mise en oscillation axiale de l'un des éléments le long de l'axe principal (X'X) à une fréquence comprise entre 50 et 500 cycles par seconde.

10. Procédé de soudure selon la revendication 5, dans lequel l'étape d'élévation de température est assurée par une mise en rotation de l'un des éléments (41, 42) autour de l'axe principal (X'X) à une vitesse comprise entre 1 000 et 10 000 tr/min selon la matière utilisée.

11. Procédé de soudure selon la revendication précédente, dans lequel la mise en rotation de l'un des éléments (41, 42) autour de l'axe principal (X'X), dans des phases de démarrage, accélération, maintien en vitesse, ralentissement et arrêt, s'effectue sur une durée totale inférieure à une seconde, l'arrêt de la rotation s'effectuant dans une position angulaire précise autour de l'axe principal (X'X) par détection de position.

12. Procédé de soudure selon la revendication 10 ou 11, dans lequel les moyens d'entraînement en rotation lors de la soudure sont choisis parmi des crans, ergots et des zones de friction.

13. Récipient en matière plastique qui comporte au moins un réservoir (40a) formé par l'assemblage d'un couple d'éléments composé d'un col (41) et d'un corps (42) soudés disposés en alignement le long d'un axe principal (X'X) et présentant en regard deux surfaces de contact, dans lequel :
- les parois d'assemblage (401, 402) des éléments de col (41) et de corps (42) à souder sont pourvues de faces d'assemblage, une externe et une interne,
- chaque paroi d'assemblage (401, 402) se compose d'une première portion d'épaisseur constante correspondant à une première portion (Sc, Sc') de la face d'assemblage,
- une paroi d'assemblage (401, 402) présente un amincissement en épaisseur par rapport au reste de l'élément (41, 42), les parois d'assemblage (401, 402) ayant alors une face de contact (Sa, Sa') inclinée (α_{c}, α_{f}) par rapport à l'axe principal (X'X),
- les dimensions radiales des parois d'assemblage (401, 402) sont telles que la paroi d'assemblage (401, 402) d'un élément (41, 42) peut être introduite en contact dans la paroi d'assemblage (402, 401) de l'autre élément (42, 41), et un effort appliqué sur un des éléments (41, 42),
- les portions amincies des parois d'assemblage (401, 402) possèdent une structure déformable,
- un apport d'énergie peut mettre en fusion la matière plastique des faces de contact (Sa, Sa') alors assemblées entre elles,
**caractérisé par le fait que**
- chaque paroi d'assemblage (401, 402) se compose, outre la première portion d'épaisseur constante et l'amincissement partiellement linéaire en épaisseur, d'une portion d'extrémité (Sp, Sp') sur laquelle l'amincissement reste sensiblement constant,
- les faces de contact (Sa, Sa') inclinées forment entre elles un écart angulaire d'au moins sensiblement 3° à 5°,
- les parois amincies des parois d'assemblage (401, 402) possèdent une structure radialement déformable,
- l'élément de col (41) et l'élément de corps (42) sont soudés conformément au procédé selon l'une quelconque des revendications 1 à 12,
- l'apport d'énergie met en fusion la matière plastique des faces de contact (Sa, Sa') en des zones locales (Zc, Zc') creusées dans ces faces pour former un volume de matière en fusion (E) disposé entre ces zones (Zc, Zc'),
- le bord (403) de la face de contact (Sc') de l'extrémité du corps (42) est revenu élastiquement en contact avec la face du col (41) en emprisonnant l'excès de matière.

14. Récipient selon la revendication précédente, **caractérisé en ce qu'**il comporte deux réservoirs (120a, 120b) dont les couples d'éléments (121, 123 ; 121', 123') sont disposés en opposition le long d'un même axe principal (X'X) et **en ce que** les corps de réservoir (123, 123') présentent un fond de corps de réservoir (124, 124') commun.

15. Récipient selon la revendication 13, **caractérisé en ce qu'**il comporte deux réservoirs (140a, 140b) dont les couples d'éléments (142, 145 ; 142', 145') sont disposés le long de deux axes principaux (X'X, Y'Y) sensiblement parallèles, et **en ce que** les réservoirs (140, 140b) comportent au moins une face interne commune (143).

16. Récipient selon la revendication 13, **caractérisé en ce qu'**il comporte au moins trois réservoirs (170a, 170b, 170c), disposés respectivement le long d'axes principaux (X'X, Y'Y, Z'Z) appartenant à un même plan.

17. Récipient selon la revendication 15 ou 16, dans lequel les réservoirs (140a1 140b ; 170a, 170b, 170c) sont disposés têtes bêches.

18. Récipient selon l'une quelconque des revendications 13 à 17, dans lequel chaque col ouvert (41) est adapté au montage d'un système de bouchage choisi entre vissage, clipsage et sertissage.

19. Récipient selon l'une quelconque des revendications 13 à 18, **caractérisé en ce qu'**il est constitué d'un matériau de base sélectionné, en fonction de la compatibilité chimique avec le contenu des réservoirs et de l'aspect recherché, parmi les matériaux thermoplastiques de polypropylènes (PP), polyéthylènes (PE), polyamides (PA), résines acétals (POM), les polyesters (PET, PEN), les polycarbonates (PC) et les résines à base de styrène (PS, SAN, ABS, SBS).

## Patentansprüche

1. Verfahren zum Verschweißen eines Halses (41) und eines Körpers (42) eines Gefäßes eines Behälters aus Kunststoff, das ein flüssiges Produkt aufnehmen kann, wobei der Hals (41) und der Körper (42) das Paar der zu verschweißenden Elemente bilden, die entlang einer Hauptachse (X'X) fluchtend angeordnet sind und zwei gegenüber liegende Kontaktflächen aufweisen, in dem:
- die Verbindungswände (401, 402) der zu verschweißenden Elemente des Halses (41) und des Körpers (42) mit Verbindungsflächen, d.h. einer äußeren und einer inneren Verbindungsfläche, versehen sind,
- jede Verbindungswand (401, 402) aus einem ersten Abschnitt mit konstanter Dicke besteht, der einem ersten Abschnitt (Sc, Sc') der Verbindungsfläche entspricht,
- eine Verbindungswand (401, 402) eine Verjüngung der Dicke in Bezug auf den Rest des Elements (41, 42) aufweist, wobei die Verbindungswände (401, 402) in diesem Fall eine in Bezug auf die Hauptachse (X'X) geneigte (α_{C3},α_{f}) Kontaktfläche (Sa, Sa') aufweisen,
- die radialen Abmessungen der Verbindungswände (401, 402) dergestalt sind, dass die Verbindungswand (401, 402) eines Elements (41, 42) bis zum Kontakt in die Verbindungswand (402, 401) des anderen Elements (42, 41) eingeführt werden kann, wobei auf eines der Elements (41, 42) eine Kraft angewendet wird,
- die verjüngten Abschnitte der Verbindungswände (401, 402) eine verformbare Struktur aufweisen,
- die Zufuhr von Energie den Kunststoff an den miteinander verbundenen Kontaktflächen (Sa, Sa') zum Schmelzen bringen kann,
- auf diese Schmelzphase eine Abkühlungsphase folgt,
**dadurch gekennzeichnet, dass**
- jede Verbindungswand (401, 402) neben dem ersten Abschnitt mit konstanter Dicke und der teilweise linearen Verjüngung der Dicke einen Endabschnitt (Sp, Sp') aufweist, an dem die Verjüngung im Wesentlichen konstant bleibt,
- die geneigten Kontaktflächen (Sa, Sa') zueinander eine Winkelabweichung von im Wesentlichen mindestens 3° bis 5° bilden,
- während die verjüngten Wände der Verbindungswände (401, 402) eine Struktur aufweisen, die mit fortschreitender Linie radial verformbar ist, wobei auf eines der Elemente (41, 42) eine Kraft angewendet wird, um die Kontaktflächen (Sa, Sa') zu verspannen, die geneigte Geometrie der Kontaktflächen (Sa, Sa') zu einer elastischen Verformung des Endes des Elements des Körpers (42) führt, was sich durch das Auftreten einer radialen Abweichung (e) zwischen der sich nicht verjüngenden Außenfläche des Elements des Halses (41) und dem Rand des Endes (Sp') des Elements des Körpers (42) zum Ende der Linie hin äußert, wohingegen die Abweichung zu Beginn der Linie praktisch Null ist,
- die Zufuhr von Energie den Kunststoff an den Kontaktflächen (Sa, Sa') in den lokalen Zonen (Zc, Zc'), die in diese Flächen gehöhlt wurden, um ein Volumen für die Schmelze (E) zu bilden, zum Schmelzen bringt,
- bei der Abkühlung der Rand (403) der Kontaktfläche (Sc') des Endes des Körpers (42) elastisch wieder mit der Fläche des Halses (41) in Kontakt kommt, wobei überschüssiges Material eingeschlossen wird.

2. Schweißverfahren nach Anspruch 1, in dem die zu verschweißenden Elemente (41, 42) durch Einspritzen von Kunststoff in eine Form mit zwei geeigneten Sätzen von Formhohlräumen oder in zwei unterschiedliche Formen geformt werden.

3. Schweißverfahren nach Anspruch 1 oder 2, in dem, während die zu verschweißende Elemente (41, 42) im Verhältnis zur Hauptachse (X'X) fluchtend positioniert sind und die Kontaktflächen (Sc, Sc') dieser Elemente einander gegenüber liegen, mindestens eines der beiden Elemente (41, 42) durch ein geeignetes Werkzeug in Position gehalten wird, so dass die Verformungen des Behälters eingegrenzt werden, und parallel zur Hauptachse eine Kraft auf mindestens eines der beiden Elemente (41, 42) mit einer Intensität angewendet wird, die so eingestellt ist, dass durch die Winkelabweichung der beiden Kontaktflächen (Sc, Sc') eine elastische Verformung von mindestens einem dieser Elemente herbeigeführt wird.

4. Schweißverfahren nach dem vorhergehenden Anspruch, in dem ein Element (41, 42) des Gefäßes (40a) durch einen Amboss mit zwei Halbschalen in Position gehalten wird.

5. Schweißverfahren nach einem der vorhergehenden Ansprüche, in dem die Temperatur des Kunststoffs an den Kontaktflächen (Sc, Sc') zwischen den beiden Elementen (41, 42) erhöht wird, wobei weiterhin die Kraft angewendet wird, bis sich die lokalen Zonen (Zc, Zc') durch Schmelzschweißung verbinden.

6. Schweißverfahren nach dem vorhergehenden Anspruch, in dem der Temperaturanstieg durch eine Zufuhr von Wärme durch fokussierte Strahlung auf die zu verschweißende Zone gewährleistet wird.

7. Schweißverfahren nach Anspruch 5, in dem der Temperaturanstieg durch einen Ultraschallgenerator gewährleistet wird, der auf 20 000 bis 50 000 Zyklen pro Sekunde eingestellt wird und mit einer Sonotrode ausgestattet ist, die an die Geometrie eines der Elemente angepasst wurde.

8. Schweißverfahren nach Anspruch 5, in dem der Temperaturanstieg gewährleistet wird durch das Einleiten einer Winkelschwingung eines der Elemente um die Hauptachse bei einer Frequenz von 50 bis 500 Zyklen pro Sekunde.

9. Schweißverfahren nach Anspruch 5, in dem der Temperaturanstieg gewährleistet wird durch die Einleitung einer axialen Schwingung eines der Elemente entlang der Hauptachse (X'X) bei einer Frequenz von 50 bis 500 Zyklen pro Sekunde.

10. Schweißverfahren nach Anspruch 5, in dem der Temperaturanstieg gewährleistet wird durch das Drehen eines der Elemente (41, 42) um die Hauptachse (X'X) bei einer Geschwindigkeit zwischen 1 000 und 10 000 U/Min., je nach benutztem Material.

11. Schweißverfahren nach dem vorhergehenden Anspruch, in dem das Drehen eines der Elemente (41, 42) um die Hauptachse (X'X) in den Phasen des Starts, der Beschleunigung, der Aufrechterhaltung der Geschwindigkeit, der Verlangsamung und des Anhaltens über eine Gesamtdauer erfolgt, die unter einer Sekunde liegt, wobei das Stoppen der Drehung in einer präzisen Winkelposition um die Hauptachse (X'X) herum durch Positionserkennung erfolgt.

12. Schweißverfahren nach Anspruch 10 oder 11, in dem die Drehantriebsvorrichtungen beim Schweißen aus Rasten, Zapfen und Reibzonen ausgewählt werden.

13. Behälter aus Kunststoff, der mindestens ein Gefäß (40a) enthält, dass durch die Verbindung eines Paars von Elementen gebildet wird, die aus einem Hals (41) und einem Körper (42) bestehen und einer Hauptachse (X'X) entlang fluchtend angeordnet sind, und welcher zwei gegenüber liegende Kontaktflächen aufweist, in dem:
- die Verbindungswände (401, 402) der zu verschweißenden Elemente des Halses (41) und des Körpers (42) mit Verbindungsflächen, d.h. einer äußeren und einer inneren Verbindungsfläche, versehen sind,
- jede Verbindungswand (401, 402) aus einem ersten Abschnitt mit konstanter Dicke besteht, der einem ersten Abschnitt (Sc, Sc') der Verbindungsfläche entspricht,
- eine Verbindungswand (401, 402) eine Verjüngung der Dicke in Bezug auf den Rest des Elements (41, 42) aufweist, wobei die Verbindungswände (401, 402) in diesem Fall eine in Bezug auf die Hauptachse (X'X) geneigte (α_{C3},α_{f}) Kontaktfläche (Sa, Sa') aufweisen,
- die radialen Abmessungen der Verbindungswände (401, 402) dergestalt sind, dass die Verbindungswand (401, 402) eines Elements (41, 42) bis zum Kontakt in die Verbindungswand (402, 401) des anderen Elements (42, 41) eingeführt werden kann, wobei auf eines der Elements (41, 42) eine Kraft angewendet wird,
- die verjüngten Abschnitte der Verbindungswände (401, 402) eine verformbare Struktur aufweisen,
- die Zufuhr von Energie den Kunststoff an den miteinander verbundenen Kontaktflächen (Sa, Sa') zum Schmelzen bringen kann,
**dadurch gekennzeichnet, dass**
- jede Verbindungswand (401, 402) neben dem ersten Abschnitt mit konstanter Dicke und der teilweise linearen Verjüngung der Dicke einen Endabschnitt (Sp, Sp') aufweist, an dem die Verjüngung im Wesentlichen konstant bleibt,
- die geneigten Kontaktflächen (Sa, Sa') zueinander eine Winkelabweichung von im Wesentlichen mindestens 3° bis 5° bilden,
- die verjüngten Wände der Verbindungswände (401, 402) eine radial verformbare Struktur aufweisen,
- das Element des Halses (41) und das Element des Körpers (42) gemäß einem Verfahren nach einem der Ansprüche 1 bis 12 miteinander verschweißt werden,
- die Zufuhr von Energie den Kunststoff an den Kontaktflächen (Sa, Sa') in den lokalen Zonen (Zc, Zc'), die in diese Flächen gehöhlt wurden, um ein zwischen diesen Zonen (Zc, Zc') angeordnetes Volumen für die Schmelze (E) zu bilden, zum Schmelzen bringt,
- der Rand (403) der Kontaktfläche (Sc') des Endes des Körpers (42) elastisch wieder mit der Fläche des Halses (41) in Kontakt kommt, wobei überschüssiges Material eingeschlossen wird.

14. Behälter nach dem vorhergehenden Anspruch, **dadurch gekennzeichnet, dass** er zwei Gefäße (120a, 120b) enthält, deren Paare von Elementen (121, 123; 121', 123') entlang ein und derselben Hauptachse (X'X) einander gegenüberliegend angeordnet sind und dadurch, dass die Gefäßkörper (123, 123') einen gemeinsamen Gefäßkörperboden (124, 124') aufweisen.

15. Behälter nach Anspruch 13, **dadurch gekennzeichnet, dass** er zwei Gefäße (140a, 140b) aufweist, deren Paare von Elementen (142, 145; 142', 145') entlang zweier im Wesentlichen paralleler Hauptachsen (X'X, Y'Y) angeordnet sind, und dadurch, dass die Gefäße (140, 140b) mindestens eine gemeinsame Innenfläche (143) aufweisen.

16. Behälter nach Anspruch 13, **dadurch gekennzeichnet, dass** er mindesten drei Gefäße (170a, 170b, 170c) umfasst, die jeweils entlang der Hauptachsen (X'X, Y'Y, Z'Z) auf ein und derselben Ebene angeordnet sind.

17. Behälter nach Anspruch 15 oder 16, in dem die Gefäße (140a1, 140b; 170a, 170b, 170c) Kopf an Fuß angeordnet sind.

18. Behälter nach einem der Ansprüche 13 bis 17, in dem jeder offene Hals (41) an die Montage eines Verschlusssystems angepasst wird, das aus Verschrauben, Einklipsen und Falzen ausgewählt wird.

19. Behälter nach einem der Ansprüche 13 bis 18, **dadurch gekennzeichnet, dass** er aus einem Grundmaterial besteht, das je nach chemischer Kompatibilität mit dem Inhalt der Gefäße und je nach gewünschtem Aussehen aus thermoplastischen Materialien aus Polypropylen (PP), Polyethylen (PE), Polyamiden (PA), Azetalharz (POM), Polyester (PET, PEN), Polycarbonaten (PC) und Styrolharzen (PS, SAN, ABS, SBS) ausgewählt wird.

## Claims

1. A method for welding between a neck (41) and a plastic vessel tank body (42) adapted to receive a liquid product, with the neck (41) and the body (42) forming a pair of elements to be welded positioned in alignment along a main axis (X'X) and having two opposite contact surfaces, wherein:
- the assembling walls (401, 402) of the neck (41) and/or body (42) elements to be welded are provided with one outer and one inner assembling faces,
- each assembling wall (401, 402) consists of a first portion having a constant thickness matching a first portion (Sc, Sc') of the assembling wall,
- one assembling wall (401, 402) has a thinned thickness relative to the rest of the element (41, 42), with the assembling walls (401, 402) then having a contact surface (Sa, Sa') inclined (α_{c}, α_{f}) relative to the main axis (X'X),
- the radial dimensions of the assembling walls (401, 402) are such that the assembling wall (401, 402) of one element (41, 42) is inserted so as to contact the assembling wall (401, 402) of the other element (41, 42), with a force being applied onto one of the elements (41, 42),
- the thinned portions of the assembling walls (401, 402) have a deformable structure,
- energy input melts the plastic material of the contact faces (Sa, Sa') then joined together,
- such melting step is followed by a step of cooling,
**characterized in that**
- in addition to the first portion having a constant thickness and the partially linear thinning in thickness, each assembling wall (401, 402) consists of an end portion (Sp, Sp') wherein thinning remains substantially constant,
- the inclined contact faces (Sa, Sa') are separated by an angular deviation of at least substantially 3° to 5°,
- with the thinned walls of the assembling walls (401, 402) having a radially deformable structure upon the wall offset in thickness, with a force being applied to one of the elements (41, 42) to constrain the contact faces (Sa, Sa'), the inclined geometry of the contact faces (Sa, Sa') induces an elastic deformation of the end of the body (42) element which causes a radial gap (e) between the not thinned outer face of the neck (41) element and the edge of the end (Sp') of the body (42) element towards the end of the offset in thickness, as opposed to the almost inexistent difference at the start of the offset in thickness,
- energy input melts the plastic material of the contact faces (Sa, Sa') at local zones (Zc, Zc') provided in such faces to form a volume of molten material (E),
- upon cooling, the edge (403) of the contact face (Sc') of the end of the body (42) elastically returns to contact the neck (41) face and retains the material in excess.

2. A welding method according to claim 1, wherein the elements (41, 42) to be welded are formed by injecting plastic material into the same mold having two sets of appropriate cavities, or into two separate molds.

3. A welding method according to claim 1 or 2, wherein, with the elements (41, 42) to be welded being positioned in alignment with the main axis (X'X) and with the contact surfaces (Sc, Sc') of such elements being positioned opposite one another, at least one of the two elements (41, 42) is held in position by an appropriate tool so as to limit the deformations of the vessel, and a force parallel to the main axis is exerted onto at least one of the two elements (41, 42) with an intensity so controlled as to cause an elastic deformation of at least one of these elements due to the angular deviation between the two contact surfaces (Sc, Sc').

4. A welding method according to the preceding claim, wherein the holding in position of one element (41, 42) of the tank (40a) is provided by an anvil consisting of two half-shells.

5. A welding method according to any one of the preceding claims, wherein the temperature of the plastic material is raised at the contact surfaces (Sc, Sc') between the two elements (41, 42) while maintaining the application of the force so as to cause the fusion welding of the local zones (Zc, Zc').

6. A welding method according to the preceding claim, wherein the temperature rise is provided by radiation heat input focused onto the zone to be welded.

7. A welding method according to claim 5, wherein the temperature rise is provided by an ultrasonic generator set between 20,000 and 50,000 cycles per second and equipped with a sonotrode adapted to the geometry of one of the elements.

8. A welding method according to claim 5, wherein the temperature rise is provided by the angular oscillation of one of the elements about the main axis at a frequency ranging from 50 to 500 cycles per second.

9. A welding method according to claim 5, wherein the temperature rise is provided by the axial oscillation of one of the elements along the main axis (X'X) at a frequency ranging from 50 to 500 cycles per second.

10. A welding method according to claim 5, wherein the step of the temperature rise is performed through the rotation of one of the elements (41, 42) about the main axis (X'X) at a speed ranging from 1,000 to 10,000rpm, depending on the material used.

11. A welding method according to the preceding claim, wherein the rotation of one of the elements (41, 42) about the main axis (X'X), in start-up, acceleration, speed holding, slowing and stopping phases, takes place over a total period of time of less than one second, with the stopping of the rotation occurring in a precise angular position around the main axis (X'X) by position detection.

12. A welding method according to claim 10 or 11, wherein the rotationally driving means during welding are selected from notches, pins and friction zones.

13. A plastic vessel, comprising at least one tank (40a) consisting of an assembly of a pair of elements consisting of a neck (41) and a body (42) welded and positioned in alignment along a main axis (X'X) and having two opposite contact surfaces, wherein:
- the assembling walls (401, 402) of the neck (41) and body (42) elements to be welded are provided with one outer and one inner assembling faces,
- each assembling wall (401, 402) consists of a first portion having a constant thickness matching a first portion (Sc, Sc') of the assembling wall,
- one assembling wall (401, 402) has a thinned thickness relative to the rest of the element (41, 42), with the assembling walls (401, 402) then having a contact face (Sa, Sa') inclined (α_{c}, α_{f}) relative to the main axis (X'X),
- the radial dimensions of the assembling walls (401, 402) are such that the assembling wall (401, 402) of one element (41, 42) can be inserted so as to contact the assembling wall (401, 402) of the other element, with a force being applied onto one of the elements (41, 42),
- the thinned portions of the assembling walls (401, 402) have a deformable structure,
- energy input can melt the plastic material of the contact faces (Sa, Sa') then joined together,
**characterized in that**
- in addition to the first portion having a constant thickness and the partially linear thinning in thickness, each assembling wall (401, 402) consists of an end portion (Sp, Sp') wherein thinning remains substantially constant,
- the inclined contact faces (Sa, Sa') are separated by an angular deviation of at least substantially 3° to 5°,
- the thinned walls of the assembling walls (401, 402) have a radially deformable structure,
- the neck (41) element and the body (42) element are welded in accordance to the method according to any one of claims 1 to 12,
- energy input melts the plastic material of the contact faces (Sa, Sa') at local zones (Zc, Zc') provided in such faces to form a volume of molten material (E), positioned between such zones (Zc, Zc'),
- the edge (403) of the contact face (Sc') of the end of the body (42) has elastically returned to contact the neck (41) face while retaining the material in excess.

14. A vessel according to the preceding claim, **characterized in that** it comprises two tanks (120a, 120b), wherein pairs of elements (121, 123; 121', 123') are arranged opposite each other along the same main axis (X'X) and **in that** the tank bodies (123, 123') have a common tank body bottom (124, 124').

15. A vessel according to claim 13, **characterized in that** it includes two tanks (140a, 140b) wherein pairs of elements (142, 145; 142', 145') are arranged along two substantially parallel main axes (X'X, Y'Y), and **in that** the tanks (140, 140b) comprise at least one common inner face (143).

16. A vessel according to claim 13, **characterized in that** it comprises at least three tanks (170a, 170b, 170c) respectively positioned along main axes (X'X, Y'Y, Z'Z) belonging to the same plane.

17. A vessel according to claim 15 or 16, wherein the tanks (140a1, 140b; 170a, 170b, 170c) are positioned heads-to-tails.

18. A vessel according to any one of claims 13 to 17, wherein each open neck (41) is adapted for mounting with a closing system selected from screwing, clipping and crimping.

19. A vessel according to any one of claims 13 to 18, **characterized in that** it consists of a base material selected among polypropylene (PP), polyethylene (PE), polyamides (PA), acetal resins (POM), polyesters (PET, PEN), polycarbonates (PC) and styrene-based resins (PS, SAN, ABS SBS) thermoplastic materials, according to the chemical compatibility thereof with the tank contents and the desired appearance.
